# FASCICULE DE BREVET EUROPEEN

(11) **EP 2 493 283 B1**
(45) Date de publication et mention de la délivrance du brevet: **26.02.2020**
(21) Numéro de dépôt: 10788111.2
(22) Date de dépôt: 29.10.2010
(51) Int. Cl.: A01G 9/033, A01G 9/02

(54) **CONTENANT MODULAIRE DE PLANTATION ET DE CULTURE ET SYSTEME ET PROCEDE DE VEGETALISATION UTILISANT DE TELS CONTENANTS**
MODULARER PFLANZUNGS- UND KULTIVIERUNGSBEHÄLTER UND SYSTEM SOWIE REKULTIVIERUNGSVERFAHREN MIT DERARTIGEN BEHÄLTERN
MODULAR PLANTING AND CULTIVATING CONTAINER AND SYSTEM AND REVEGETATION METHOD USING SUCH CONTAINERS

(30) Priorité: 29.10.2009 FR 0957631
(43) Date de publication de la demande: 05.09.2012
(73) Titulaire: SOPREMA (SAS), 67100 Strasbourg (FR)
(72) Inventeur: BINDSCHEDLER, Pierre-Etienne, 67000 Strasbourg (FR); LASSALLE, François, 67000 Strasbourg (FR); SINDT, Lionel, 67400 Illkirch (FR); BEIX, Yannik, 91400 Saclay le Val D'Albian (FR)
(74) Mandataire: Nuss, Laurent
(86) Numéro de dépôt international: PCT/FR2010/052325
(87) Numéro de publication internationale: WO 2011/051632

(56) Documents cités:
- WO-A1-2009/132439
- US-A1- 2002 007 592
- US-A1- 2007 079 547
- US-A1- 2008 168 710
- US-A1- 2009 320 364
- US-B1- 6 606 823

## Description

La présente invention concerne le domaine de la réalisation de surfaces végétalisées, plus particulièrement la mise en place d'une végétation extensive ou semi-intensive au niveau de surfaces en hauteur et généralement non accessibles, telles que les surfaces de toits, toits-terrasses ou analogues.

L'invention a plus particulièrement pour objet un contenant modulaire pour les réalisations précitées, un système de végétalisation comprenant de tels modules et un procédé de réalisation d'une végétation extensive mettant en œuvre de tels modules.

Il existe depuis plusieurs décennies une demande en matière d'aménagement des toits, notamment horizontaux mais également inclinés, et des terrasses, concernant la mise en place d'une végétation sur ces supports.

Ces réalisations du type "jardin sur toit", notamment connues sous les désignations "terrasses-jardins" ou végétalisation intensive, sont généralement effectuées par l'entrepreneur de jardins qui dispose une couche de drainage sur le support, la recouvre de terre végétale et y cultive des végétaux ornementaux de même type que dans les jardins au sol.

Pour s'affranchir de la surcharge pondérale et des contraintes d'entretien résultant de cette technique traditionnelle, il a été proposé des techniques alternatives ne nécessitant pas d'arrosage et mettant en œuvre des composants choisis (substrats, couche filtrante et couche de drainage) sur une faible épaisseur et une gamme végétale spécifique, éventuellement, au moins partiellement, conditionnés sous forme de rouleaux à dérouler sur site.

Néanmoins, ces techniques alternatives sont déclinées uniquement sous forme de systèmes standards adaptés aux grandes surfaces, sont destinées à être mises en œuvre par des personnels spécialisés, ne sont pas accessibles à l'utilisateur bricoleur occasionnel, ne conviennent pas aux petites surfaces et ne sont que difficilement adaptables aux contraintes particulières telles que des contraintes climatiques locales, des contraintes esthétiques spécifiques ou autres.

En outre, ces techniques alternatives nécessitent la mise en place systématique d'une couche filtrante entre le substrat de culture et la couche de drainage ainsi que l'installation d'éléments d'arrêt sur les supports en pente pour la rétention des différentes couches.

Pour tenter de pallier ces inconvénients, il a été proposé de mettre en œuvre des systèmes de végétalisation modulaire, basés sur des contenants précultivés, adaptés à des surfaces de taille variable et pouvant être disposés sur un support étanche, sans nécessiter d'aménagement professionnel.

Une telle solution est, par exemple, proposée par le dépôt FR 2 793 383 au nom de la demanderesse, dont les modules sous forme de bacs précultivés peuvent être posés sur un support étanche moyennant une couche intermédiaire drainante.

Toutefois, il a été constaté que, dans certaines circonstances, les lignes de jonction entre modules demeuraient apparentes et conféraient à l'ensemble végétalisé un aspect de structure à damier, accentué par la relative faible épaisseur du substrat de culture.

Des solutions similaires, mettant en œuvre des bacs étanches ou contenant du substrat de culture, ont été présentées dans les documents FR 2 929 632 et EP 1 044 599, ces dernières variantes présentant la même limitation que celle découlant du dépôt FR 2 793 3983 précité.

Afin de surmonter cette limitation, il a été proposé, comme le montre par exemple le document US 2008/0168710, de réaliser le contenant en deux parties séparables, à savoir un bac inférieur et un corps en forme de manchon ou de col qui est monté sur ledit bac et en prolonge les parois vers le haut.

Dans les différents modes de réalisation du contenant divulgué par ce document, le corps en forme de col ou de ridelle est constitué d'une simple bande ou feuille souple et nécessite un maintien latéral ferme, obtenu par l'intermédiaire de multiples moyens de blocage ou d'accrochage intégrés au bac ou la prévision de parois latérales du bac de grande hauteur. Il en résulte à nouveau une apparence de damier pour la surface végétalisée et une grande consommation de matière pour la réalisation du bac.

Ainsi, ce corps amovible en forme de col ou de ridelle fait état d'une paroi latérale trop souple pour, d'une part, retenir efficacement une couche de substrat de culture dépassant notablement les parois latérales du bac et, d'autre part, autoriser, le cas échéant, un gerbage de contenants précultivés.

De plus, le contenant visé par le document US précité présente une forme complexe à fabriquer, entraînant un prix de revient élevé.

Enfin, le document US 2002/007592 A1 divulgue un contenant présentant les mêmes limitations que celles indiquées précédemment, à savoir une forme complexe à fabriquer, un prix de revient élevé et la présence de lignes de jonction apparentes au niveau d'un ensemble végétalisé formé avec de tels contenants.

La présente invention a pour but de pallier au moins les inconvénients évoqués précédemment.

Ce but est atteint par l'invention par un contenant selon le préambule de la revendication 1 qui présente, en outre, les dispositions de la partie caractérisante de ladite revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
La figure 1 est une vue schématique de dessus d'un contenant selon un premier mode de réalisation de l'invention ;
La figure 2 est une vue schématique en élévation latérale du contenant représenté sur la figure 1 ;
Les figures 3A, 3B et 3C sont des vues partielles en coupe selon A-A, B-B et C-C du contenant représenté sur la figure 1 ;
Les figures 4A, 4B, 4C et 4D sont des vues de dessus des flancs formant respectivement le bac (figure 4A), le corps en forme de manchon (figures 4B et 4C) et une structure de piétement (figure 4D), à l'état déployé (les lignes de pliage sont indiquées en traits interrompus) pour un contenant tel que ressortant des figures 1 à 3 ;
La figure 5 est une vue schématique en coupe (selon un plan de section parallèle à la largeur du contenant) d'un contenant selon les figures 1 à 3, précultivé et faisant partie d'un système de végétalisation, après mise en place sur un support (avant enlèvement du manchon supérieur) ;
La figure 6 est une vue en élévation latérale d'un empilement de trois contenants précultivés selon la figure 5, mutuellement gerbés ;
La figure 7 est une vue de détail en coupe transversale et à une échelle différente du matériau constituant le bac et le corps en forme de manchon faisant partie du contenant selon l'invention, ainsi qu'éventuellement la structure de piétement ;
Les figures 8A et 8B sont des vues en perspective selon deux orientations différentes d'un bac moulé et d'un corps en forme de manchon, formant après assemblage un contenant selon un second mode de réalisation de l'invention ;
Les figures 9A et 9B sont des vues en perspective du bac faisant partie du contenant des figures 8A et 8B, selon deux directions différentes ;
La figure 10 est une vue en élévation plane de dessus du bac des figures 9A et 9B ;
les figures 11A et 11B sont des vues en coupe selon A-A et B-B du bac représenté à la figure 10 ;
La figure 12 est une vue en perspective d'un corps en forme de manchon faisant partie d'un contenant tel que représenté aux figures 8A et 8B, et,
Les figures 13A et 13B sont des vues en perspective selon deux directions différentes d'un bac selon une variante du second mode de réalisation de l'invention, dépourvu de piétement.

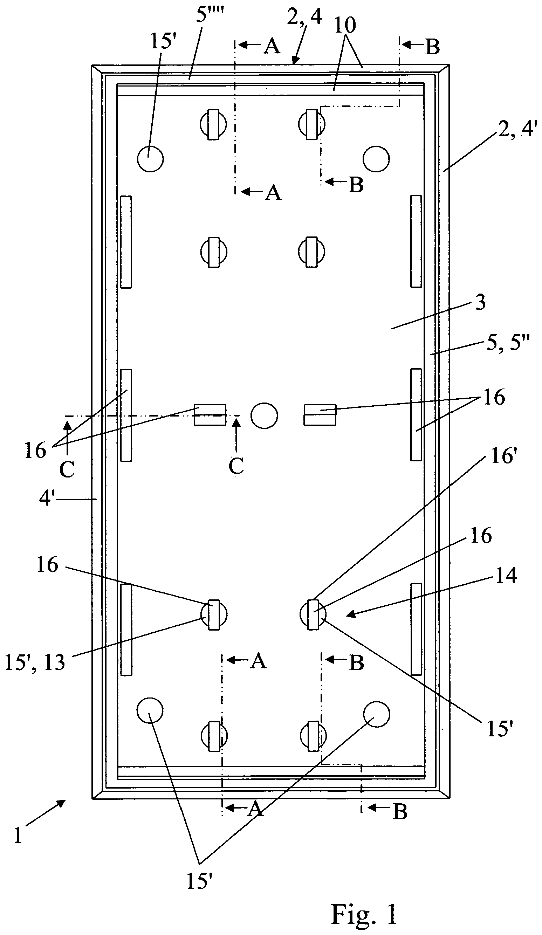

Les figures 1 à 3, 5, 6 et 8 montrent un contenant 1 modulaire de plantation et de culture, essentiellement constitué par un récipient inférieur fermé sous forme de bac 2 rectangulaire avec un fond 3 plat ou nervuré et des parois latérales 4, 4' et par un corps 5 en forme de manchon rectangulaire monté de manière amovible sur et/ou dans ledit bac 2 et s'étendant, à l'état monté, au-delà des bords supérieurs 4" des parois latérales 4, 4' du bac 2.

Conformément à l'invention, au moins le manchon 5 est réalisé en un matériau plan creux constitué d'au moins deux feuilles 6 reliées par une structure d'entretoisement 6'.

Le bac 2 peut être réalisé en différents matériaux et par l'intermédiaire de différents procédés de fabrication, ce notamment en fonction de la forme souhaitée, de la résistance recherchée et/ou du matériau constitutif mis en œuvre.

Toutefois, selon un premier mode de réalisation de l'invention, ledit bac 2 est également réalisé en un matériau plan creux constitué d'au moins deux feuilles 6 reliées par une structure d'entretoisement 6' (figures 1 à 3, 5 et 6).

La mise en œuvre d'un tel matériau permet d'aboutir à une constitution rigide, même en paroi simple (une seule couche de matériau plan creux), pour le bac 2 et le manchon 5, tout en utilisant une quantité de matière limitée résultant en un faible poids.

En particulier, la résistance du manchon 5 réalisée avec ce matériau est ainsi suffisante, d'une part, pour contenir la couche de complexe de culture 17 s'étendant au-delà du bord supérieur 4" des parois latérales 4 et 4' du bac 2 et, d'autre part, pour soutenir sans fléchissement le poids d'au moins un contenant 1 précultivé (complexe 17 + végétaux 18), lorsque ce dernier est gerbé sur un contenant 1 inférieur pourvu d'un tel manchon 5.

Préférentiellement, le bac 2 et le manchon 5 d'un contenant 1 consistent chacun en un article obtenu par pliage d'un flanc découpé respectif 2', 5' de matériau plan creux d'un seul tenant.

Un tel mode de réalisation permet d'aboutir à un coût de fabrication matière très peu élevé, à une construction rigide avec un matériau plan de faible grammage et à un encombrement minimum de chacune des composantes du contenant 1 à l'état déplié, c'est-à-dire du bac 2 et du manchon 5 formant ridelle.

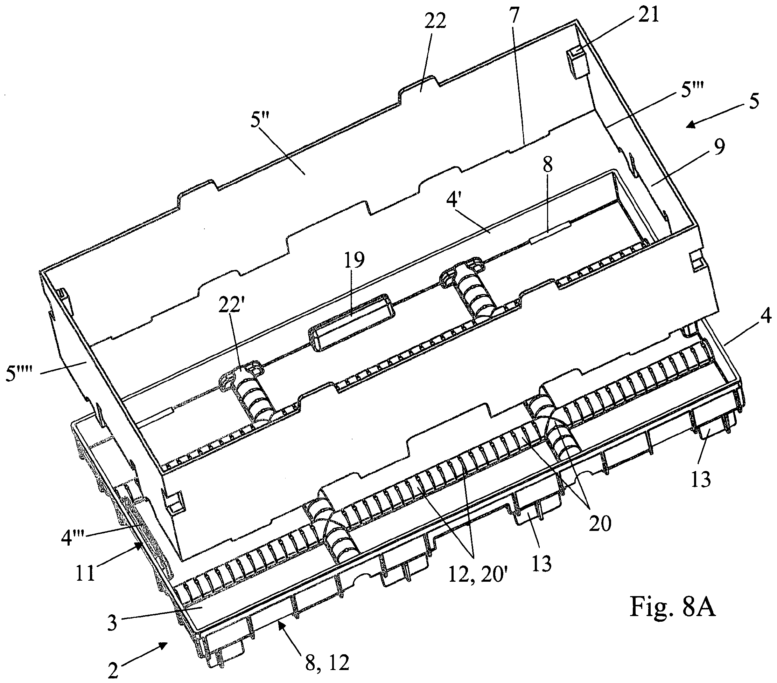

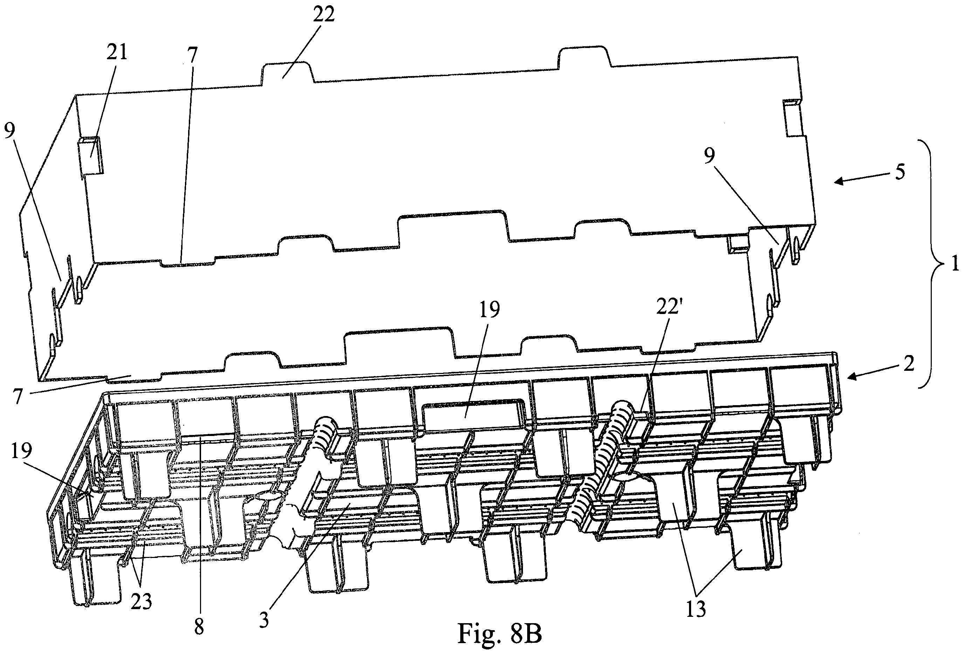

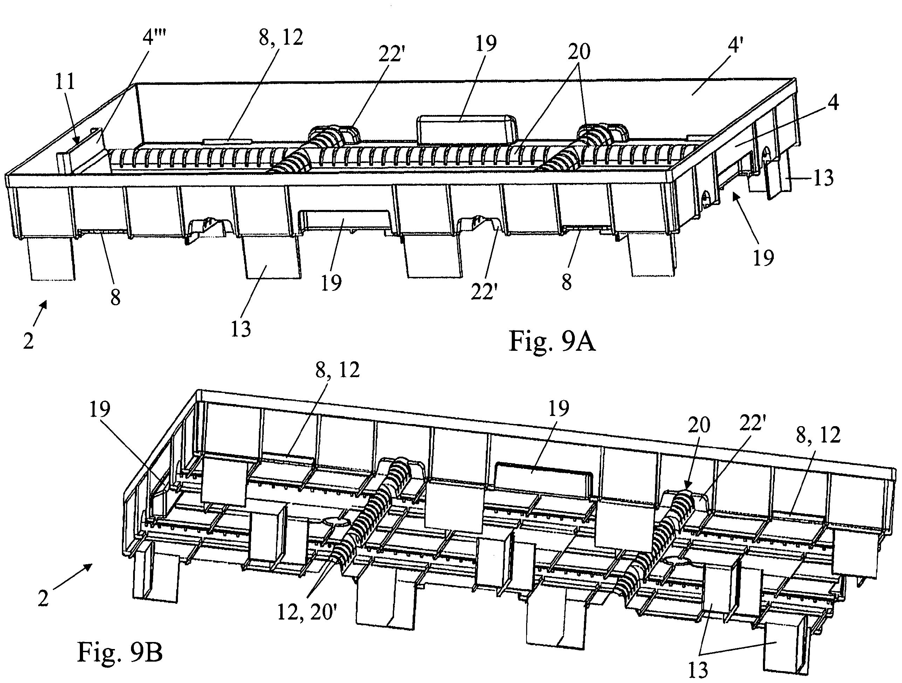

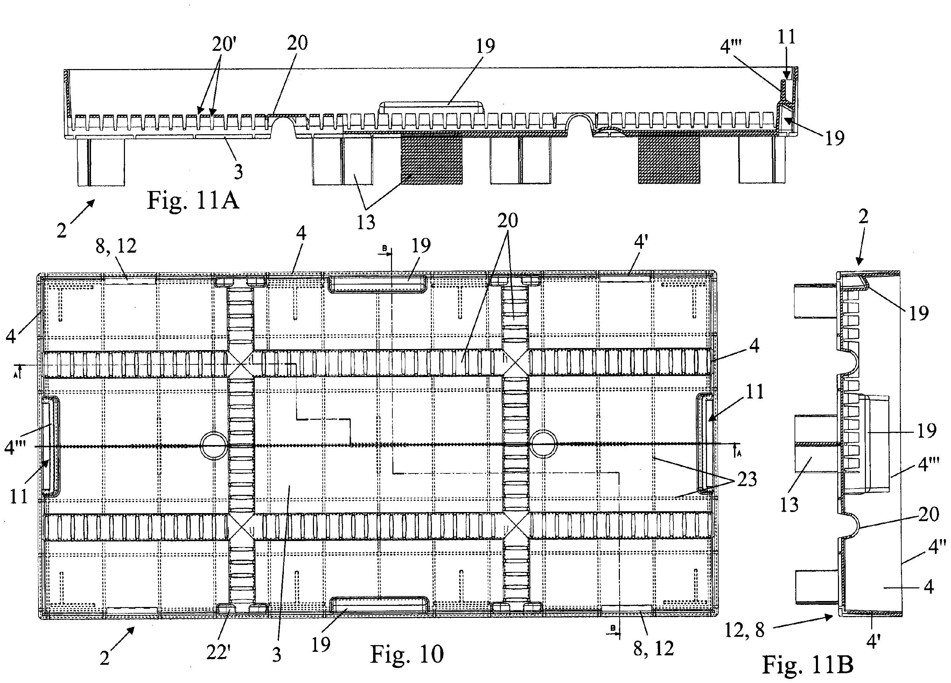

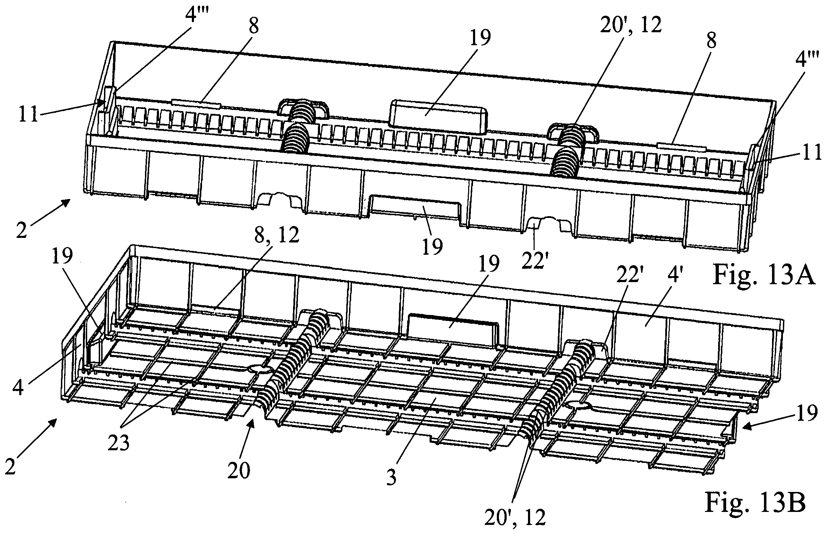

Conformément à un second mode de réalisation, représenté aux figures 8, 9, 10, 11 et 13 des dessins, il peut être prévu que le bac 2 consiste en un bac venu de moulage, préférentiellement comme pièce finie d'un seul tenant.

Ce second mode de réalisation de l'invention permet d'aboutir à un bac à structure plus rigide pour une même épaisseur de parois (latérales et de fond) et de s'affranchir de tout travail manuel de montage du bac 2 réalisé à partir d'un matériau en flanc (réduction des coûts de main d'œuvre, fabrication et manipulations automatisées).

Les mêmes signes de références ont été utilisés ci-après pour désigner des parties ou éléments similaires dans les deux modes de réalisation.

Suivant l'invention, au moins deux 5"" des parois 5", 5"" formant le manchon 5, préférentiellement au moins deux parois 5"" opposées de ce dernier, sont pourvues d'au moins une languette ou patte d'ancrage 7 au niveau de leurs bords inférieurs 5"'. De plus, le fond 3 du bac 2 est pourvu d'au moins deux découpes 8 en forme de fentes, s'étendant chacune le long d'une des parois latérales 4, 4' dudit bac 2 et destinée à recevoir ladite ou une des languettes ou pattes d'ancrage 7, lorsque la paroi 5"" concernée du manchon 5 repose sur ledit fond 3, c'est-à-dire en position montée du manchon 5 sur et/ou dans le bac 2.

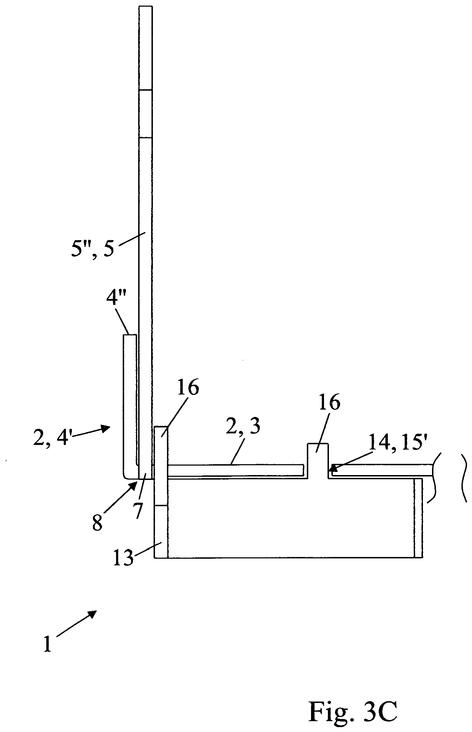

Ainsi, tel que représenté partiellement à la figure 3C et aux figures 8, 9 et 13, le maintien latéral avec blocage des parois 5", 5"" du manchon 5 est assuré par les parois latérales 4, 4' du bac 2 en coopération avec les pattes d'ancrage 7 engagées dans les fentes 8, les éventuelles contraintes d'appui générées par un contenant supérieur 1 supporté par le manchon 5 d'un contenant 1 inférieur étant transmises directement au fond 3 du bac 2.

En accord avec une caractéristique additionnelle ou une variante du premier mode de réalisation de l'invention, au moins certaines des parois 5", 5"" formant le manchon 5, préférentiellement au moins deux parois 5" opposées de ce dernier, sont pourvues d'au moins une languette ou patte d'ancrage 9 au niveau de leurs bords inférieurs 5"' et au moins deux parois latérales 4, 4' du bac 2, préférentiellement au moins deux parois latérales 4 opposées de ce dernier, sont constituées par des ailes 10 repliées sur elles-mêmes, préférentiellement avec prise en sandwich d'ailes 10' pliées prolongeant les deux autres parois latérales 4' du bac, et comportent chacune au moins une découpe 11 en forme de fente au niveau de leur bord supérieur 4", destiné à recevoir ladite ou une des languettes ou pattes d'ancrage 9 lorsque la paroi 5" concernée du manchon 5 repose sur ledit bord 4".

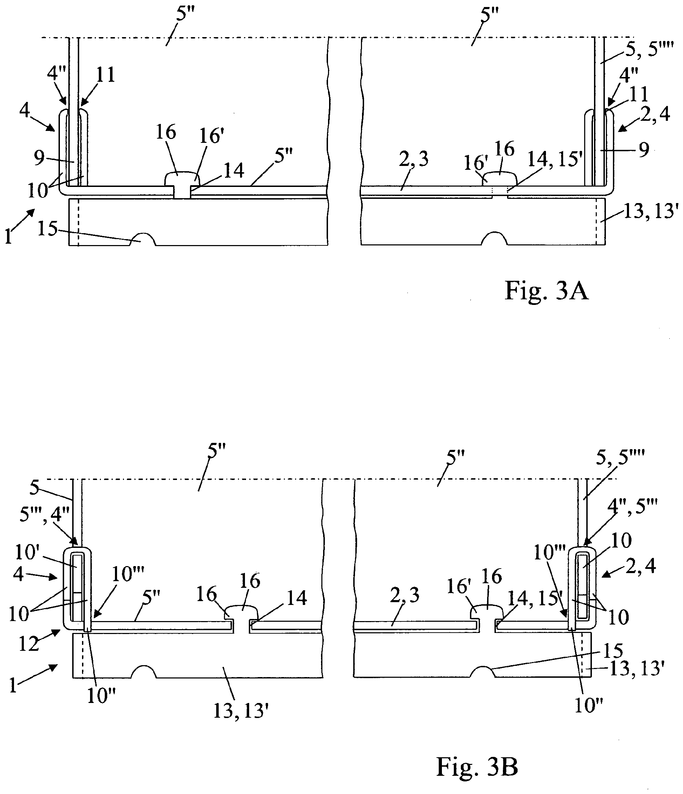

Dans cette variante du premier mode, représentée partiellement aux figures 3A et 3B, le maintien latéral avec blocage des parois 5" concernées du manchon 5 est assuré par engagement des languettes ou pattes 9 entre les deux couches de matériau plan creux des parois 4, 4' constituées par le repliement des ailes 10, les éventuelles contraintes d'appui générées par un contenant supérieur 1 supporté par le manchon 5 d'un contenant 1 inférieur étant transmises auxdites parois doubles 4, 4' et éventuellement au fond 3 du bac 2 par les languettes ou pattes 9 prenant appui sur ce dernier.

L'emprisonnement des ailes 10' permet d'augmenter la rigidité et la résistance mécanique du bac 2 réalisé par pliage en accord avec le premier mode de réalisation (liaison par imbrication entre les parois 4 et 4' / parois 4, 4' à trois couches de matériau plan creux), tout en fournissant l'interstice adapté à la réception des languettes ou pattes d'ancrage 9 entre les portions d'ailes 10 repliées formant les deux couches extérieures de la paroi 4 ou 4' considérée.

Le repliement des ailes 10 est verrouillé par l'intermédiaire de pattes d'extrémité 10" venant en engagement dans des découpes 10"' ménagées dans le fond 3 à proximité des côtés latéraux de ce dernier (voir figure 3B).

En accord avec une caractéristique additionnelle ou une variante avantageuse du second mode de réalisation de l'invention, au moins certaines des parois 5", 5"" formant le manchon 5, préférentiellement au moins deux parois 5"" transversales opposées de ce dernier, sont pourvues d'au moins une languette ou patte d'ancrage 9 au niveau de leurs bords inférieurs 5"'. De plus, au moins deux parois latérales 4, 4' du bac 2, préférentiellement au moins deux parois latérales 4 transversales opposées de ce dernier, comportent alors chacune au moins une fente 11 au niveau de leur bord supérieur respectif 4" ou à proximité de ce dernier, sous la forme d'une découpe ou d'un interstice plan entre la face interne ou externe de ladite paroi 4 et une aile 4"' formée sur cette dernière et s'étendant parallèlement à elle, chacune desdites fentes 11 étant destinée à recevoir ladite ou une des languettes ou pattes d'ancrage 9 lorsque le manchon 5 est monté dans le bac 2 (figures 8A, 9A et 13).

Une fente 11 par paroi 4, 4' est normalement suffisante, ce compte tenu notamment de la rigidité intrinsèque du matériau formant le manchon 5.

Les variantes constructives décrites ci-dessus peut affecter l'ensemble des parois 4 et 4' du bac 2.

Toutefois, en accord avec un mode de réalisation préféré de l'invention, le manchon 5 présente, à l'état monté, au moins deux parois latérales opposées 5" qui reposent sur le fond 3 du bac 2 et qui sont en contact surfacique avec les faces internes des parois latérales 4' opposées correspondantes du bac 2, les deux autres parois opposées 5"" du manchon 5 reposant éventuellement sur les bords supérieurs 4" des autres parois latérales opposées 4 du bac 2, les languettes ou pattes d'ancrage 7 et 11 étant engagées dans les découpes de réception correspondantes respectives 8 et 11 du fond 3 et des parois latérales 4 concernées du bac 2.

Ce mode de réalisation préféré applique, par conséquent, chacun des variantes constructives proposées par les première et seconde variantes précitées à une paire de parois opposées 4 ou 4'.

Dans le premier mode de réalisation, le manchon 5 repose par deux parois 5" opposées (préférentiellement longitudinales - grands côtés) sur le fond 3 et par ses deux autres parois 5"" sur les bords supérieurs 4" des deux parois opposées 4 (préférentiellement transversales - petits côtés) et dans le second mode de réalisation, les quatre parois 5" et 5"" reposent sur le fond 3 du bac 2 (éventuellement à l'exception des languettes 7 et 9 ou de découpes qui correspondent à des projections rentrantes 19, 21, du bac 2), ou seulement deux 5" desdites parois 5", 5"", les deux autres 5"" reposant alors sur la tranche par exemple des parois 4 correspondantes du bac 2 .

Avantageusement, en relation avec le premier mode de réalisation, les parois latérales du bac 2 consistant en des ailes repliées 10 de la partie de flanc 2' constituant le fond 3 et présentant des découpes en forme de fente 11 au niveau de leurs bords supérieurs 4" correspondent aux parois latérales 4 de plus faible dimension du bac 2 rectangulaire. Le rapport de dimension entre les parois latérales 4 et 4' peut de manière pratique être de deux.

Afin de permettre l'évacuation d'un éventuel trop plein d'eau, le fond 3 et les bases des parois latérales 4 et 4' du bac 2 peuvent être pourvus de découpes 12 formant des ouvertures traversantes, les découpes des bases des parois latérales 4' étant éventuellement formées dans le prolongement des découpes en forme de fentes 8 du fond 3 du bac 2 recevant les ou certaines des languettes d'ancrage 7 du manchon 5.

Conformément à une caractéristique de l'invention permettant la création d'un espace de stockage, de circulation et d'évacuation contrôlée d'eau sous le bac 2, réalisant simultanément une mise hors eau du complexe de culture 17 présent dans le bac 2, il peut être prévu que le contenant 1 comporte également au moins une structure de piétement 13 s'étendant sous le bac 2, formée d'un seul tenant avec ledit bac 2 ou reliée à ce dernier au niveau de sites de fixation 14 ménagés dans le fond 3 et présentant des ajours 15 autorisant la circulation de liquide sous ledit bac 2.

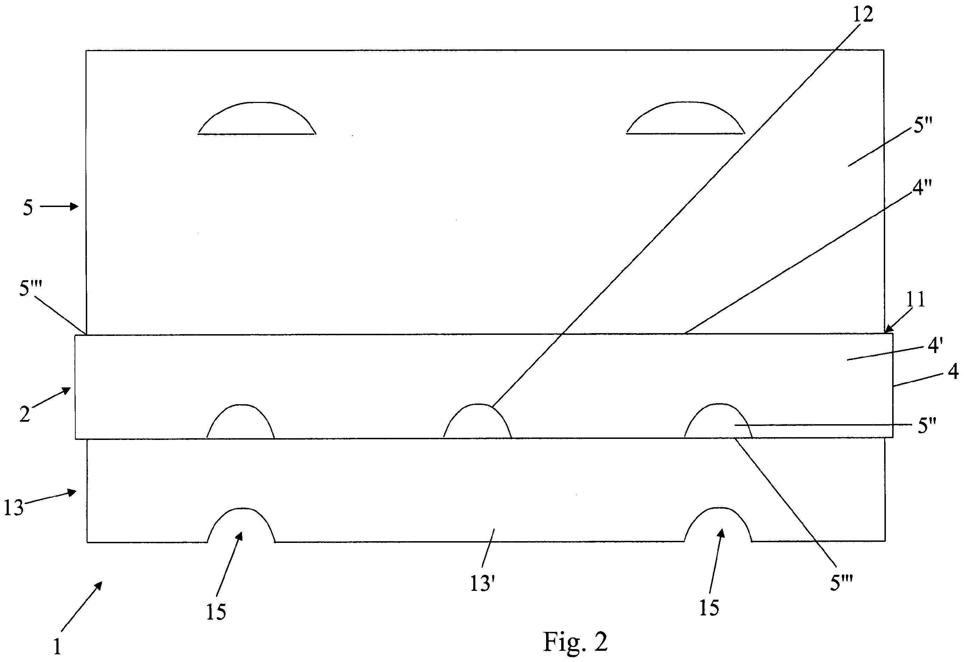

Préférentiellement, et en relation avec le premier mode de réalisation, la ou chaque structure de piétement 13 peut consister en un manchon ou cadre obtenu par pliage en une structure fermée sur elle-même d'une bande 13' de matériau plan creux d'un seul tenant et présentant, d'une part, des découpes 15 formant des ajours au niveau de son bord inférieur destiné à venir en appui sur le support recevant le contenant 1 et, d'autre part, des languettes ou pattes d'assemblage 16 pourvues de moyens d'accrochage 16', par exemple du type crochet ou épaulement, et s'engageant avec venue en prise dans les sites de fixation 14 ménagés dans le fond 3 du bac 2 (figures 2, 3 et 4C).

Ainsi, chaque structure de piétement 13 est réalisée en un matériau similaire à celui formant le bac 2 et le manchon 5, alliant légèreté et rigidité.

Préférentiellement, le contenant 1 peut comporter quatre structures de piétement alignées deux par deux sous le fond 3 et formées par paire alignées à partir d'une unique bande de matériau plan creux 13' disposée de chant (avec son plan situé perpendiculairement au plan du fond 3).

Ces structures de piétement 13 constituent, en outre, des renforts de rigidification du fond plat 3 et réalisent un support réparti de la charge contenue dans le bac 2.

La matière formant le matériau plan creux peut être de différentes natures, en particulier bio-sourcée ou non.

Ainsi, le matériau plan creux peut consister en du carton ondulé, simple ou double, enduit d'une couche ou revêtu d'un parement étanche, rendant également le matériau plan creux résistant à l'eau, au moins durant la phase de mise en culture, la structure d'entretoisement 6' étant formée par une feuille ondulée définissant des parois reliées aux deux feuilles de parement 6.

En variante, le matériau plan creux peut consister en un profilé extrudé de polymère thermoplastique (par exemple du polypropylène), la structure d'entretoisement 6' étant constituée par des parois perpendiculaires reliant les deux feuilles 6 formant les faces opposées du matériau.

En relation avec les deux modes de réalisation précités, il est préférentiellement prévu que le flanc 5' formant le manchon 5 est découpé et plié de telle manière que les parois d'entretoisement 6' s'étendent dans la direction transversale par rapport aux plans des parois 5", 5"" dudit manchon 5.

En relation avec le premier mode de réalisation précité, il est préférentiellement prévu que le flanc 2' formant le bac 2 est découpé et plié de telle manière que les parois d'entretoisement 6' s'étendent dans la direction longitudinale pour le fond 3 du bac 2 et dans la direction transversale par rapport aux plans respectifs des parois latérales 4, 4' du bac 2.

Selon une autre variante, et toujours en relation avec le premier mode de réalisation, le bac 2, le corps en forme de manchon 5 et, le cas échéant, la ou les structure(s) de piétement 13 sont réalisées en des matériaux plan creux de natures différentes.

Selon une caractéristique additionnelle de ce premier mode, le matériau plan formant le corps supérieur amovible en forme de manchon 5 peut présenter une constitution moins rigide, et éventuellement un grammage moins élevé, que le matériau plan formant le bac 2, et éventuellement la structure de piétement 13.

En relation avec le second mode de réalisation de l'invention, ressortant des figures 8 à 13, il est avantageusement prévu que le bac 2 moulé, par exemple par injection ou thermoformage, est réalisé en un matériau polymère thermoplastique ou thermodur, renforcé ou non par des charges fibreuses ou autres, en particulier en un matériau choisi dans le groupe formé par le polyester, le polyéthylène haute densité et le polypropylène.

Afin de faciliter la manipulation des contenants 1, en particulier ceux à bac 2 moulé, il peut en outre être prévu qu'au moins deux parois latérales 4, 4' opposées du bac 2 moulé par injection ou thermoformé, de forme rectangulaire, préférentiellement les quatre parois latérales 4, 4', présentent des déformations locales rentrantes 19 qui définissent des renfoncements sur les faces latérales extérieures du bac 2, pouvant servir de poignées de préhension du contenant 1.

Afin de rigidifier globalement la structure du bac 2 moulé ou thermoformé, en particulier le fond 3, et de fournir simultanément des moyens de circulation bidirectionnelle de liquide, la paroi du fond 3 du bac 2, moulé par injection ou thermoformé, est avantageusement pourvue de déformations locales 20, préférentiellement à extension linéaire dans les directions longitudinale et transversale dudit bac 2, définissant des nervures creuses proéminentes par rapport à la face intérieure dudit fond 3, préférentiellement à section semi-circulaire, ces nervures 20 étant avantageusement pourvues d'ajours 20' sous forme de fentes transversales (figures 8 à 11 et 13).

Les nervures creuses 20 forment ainsi en sous-face du bac 2 des canaux d'écoulement de l'eau de pluie et les fentes 20' autorisent une évacuation de l'excédent d'eau des bacs 2, ainsi qu'un passage des racines des plantes présentes dans le contenant 1.

Le fond 3 peut, en outre, comporter également des nervures pleines 23 sur la face extérieure rigidifiant ledit fond entre les nervures creuses 20.

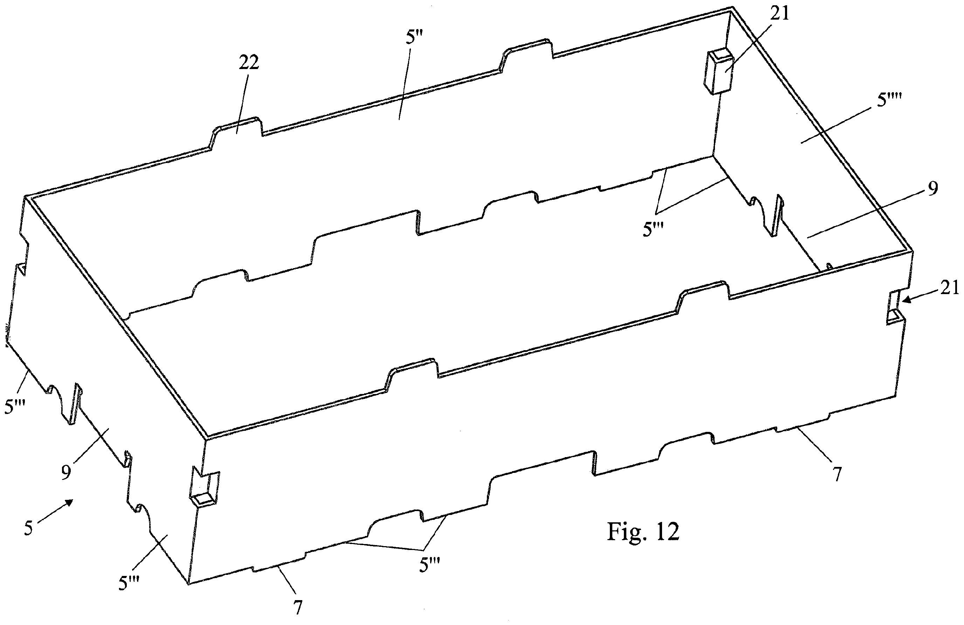

En vue de consolider et de stabiliser le gerbage des contenants 1, tout en répartissant davantage la pression sur le manchon rectangulaire 5, ce dernier peut être pourvu, dans les deux modes de réalisation précités, au niveau de ses coins de projections rentrantes 21, par exemple obtenus par déformation locale par pliage de portions découpées du flanc 5' de matériau plan creux constituant ledit manchon 5, ces projections 21 correspondant à des sites d'appui pour le bac 2 ou le piétement 13 du contenant 1 supérieur lors du gerbage ou de l'empilement de plusieurs contenants 1 (figures 8A, 8B et 12).

Comme le montrent également les figures 8 à 13 en relation avec le second mode de réalisation, le bord supérieur d'au moins certaines des parois 5", 5"" du manchon 5 peut être pourvu de portions proéminentes 22, par exemple en forme de languettes, et en ce que le bac 2 est pourvu, au niveau d'au moins deux parois latérales 4, 4' opposées, de renfoncements ou de retraits 22' de forme sensiblement complémentaire auxdites portions proéminentes 22, lesdites portions 22 venant en engagement dans les renfoncements ou retraits 22' du bac 2 du contenant 1 supérieur en cas d'empilement avec gerbage de plusieurs contenants 1.

Cette disposition permet de stabiliser davantage encore le gerbage de plusieurs contenants 1.

Ces renfoncements ou retraits 22' peuvent éventuellement être formés dans la continuité des nervures 20 au niveau de leur raccordement avec les parois latérales 4, 4' du bac 2.

Comme cela ressort des dessins annexés, et en fonction notamment du mode de réalisation du bac 2 selon l'invention, la structure de piétement 13 peut consister en un nombre plus limité de pieds à zone d'appui individuelle plus étendue (premier mode de réalisation) ou en un nombre plus important de pieds à zone d'appui individuelle plus limitée, en particulier à section transversale en X, I, H ou T (second mode de réalisation) et formés d'un seul tenant avec le bac 2 moulé.

En l'absence de piétement 13, le bac 2 peut être en totalité réalisé en une matière putrescible.

Il peut notamment être prévu que le matériau constituant le bac 2 et/ou le matériau constituant le manchon 5 soient de nature biodégradable.

En présence d'une structure de piétement 13, au moins la partie du flanc 2' formant le fond 3 en forme de plateau est réalisée en un matériau imputrescible et résistant de manière pérenne à la charge combinée du complexe et des plantes, ainsi que des possibles charges additionnelles générées par les agents atmosphériques (pluie, neige, etc), voire des charges occasionnelles supplémentaires liées à la maintenance.

Les flancs 5' et, le cas échéant, les bandes 13' formant respectivement les manchons 5 et éventuellement la ou les composante(s) de la structure de piétement 13 sont découpés de telle manière dans le matériau plan creux qu'on aboutit à une résistance maximale à la flexion dans la direction verticale (perpendiculaire au fond 3 du bac 2), après pliage et assemblage du contenant 1.

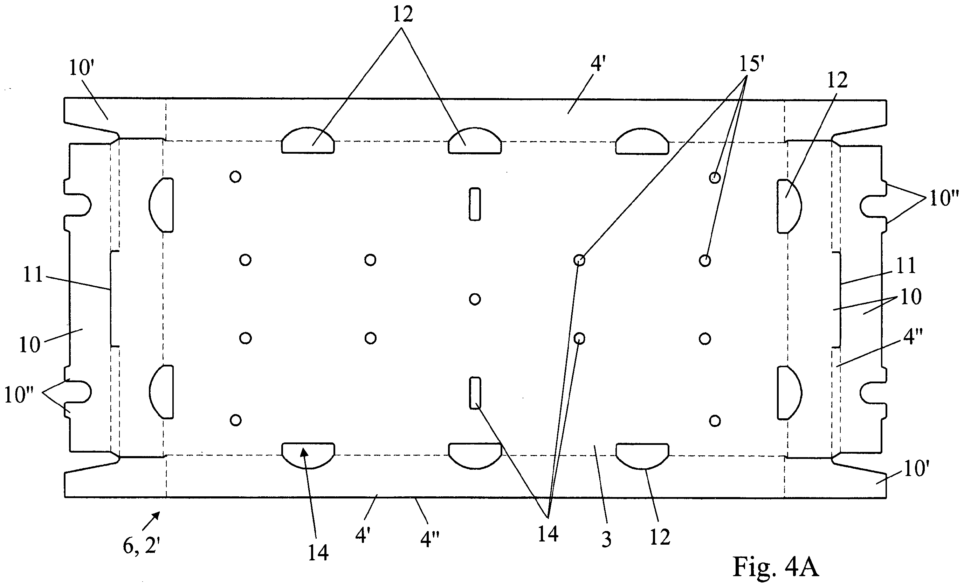

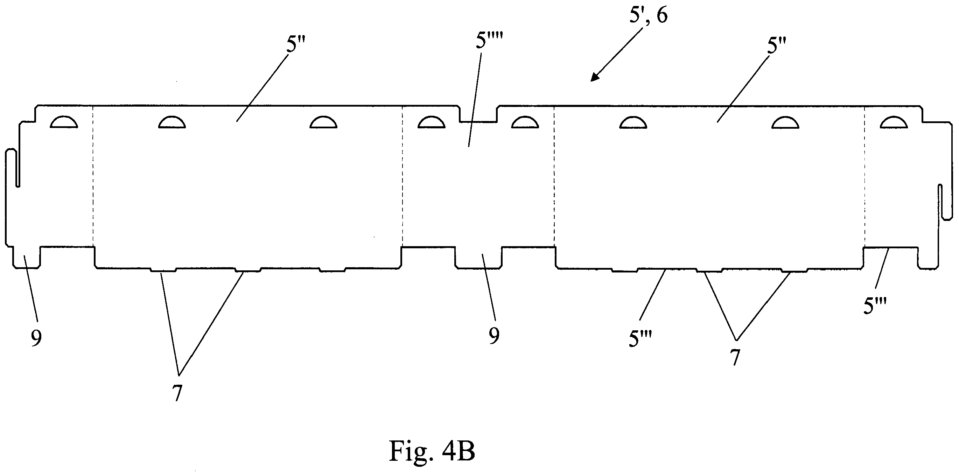

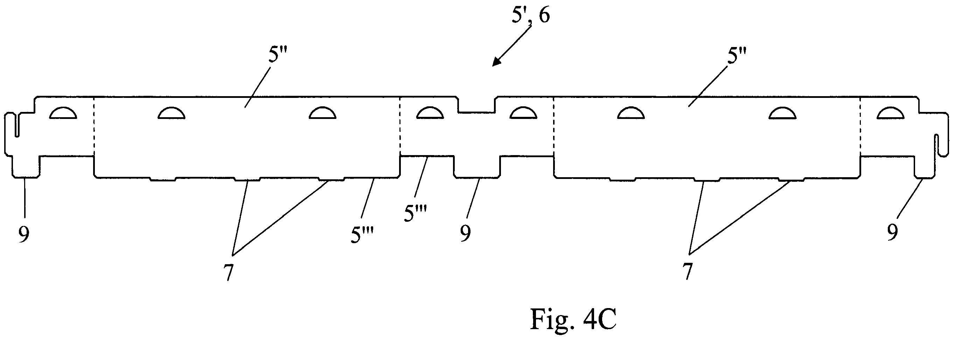

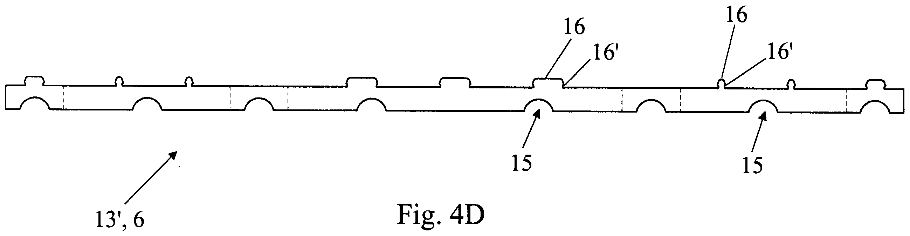

Comme le montrent les figures 4B et 4C, les manchons peuvent présenter des hauteurs variées, adaptées au type de plantes 18 cultivées par exemple et/ou à la hauteur de la couche de complexe 17 disposée dans le contenant 1. Les flancs 5' formant les manchons 5 présentent à leurs extrémités longitudinales opposées des pattes d'accrochage permettant de verrouiller le pliage en manchon.

Dans le cadre du premier mode de réalisation notamment, le fond 3 du bac 2 comporte avantageusement plusieurs ouvertures 15' pour l'évacuation de l'eau, préférentiellement réparties de manière homogène sur toute la surface du fond 3, certaines de ces ouvertures 15' pouvant servir de site de fixation 14 pour les languettes 16 de la ou des composante(s) de la structure de piétement 13.

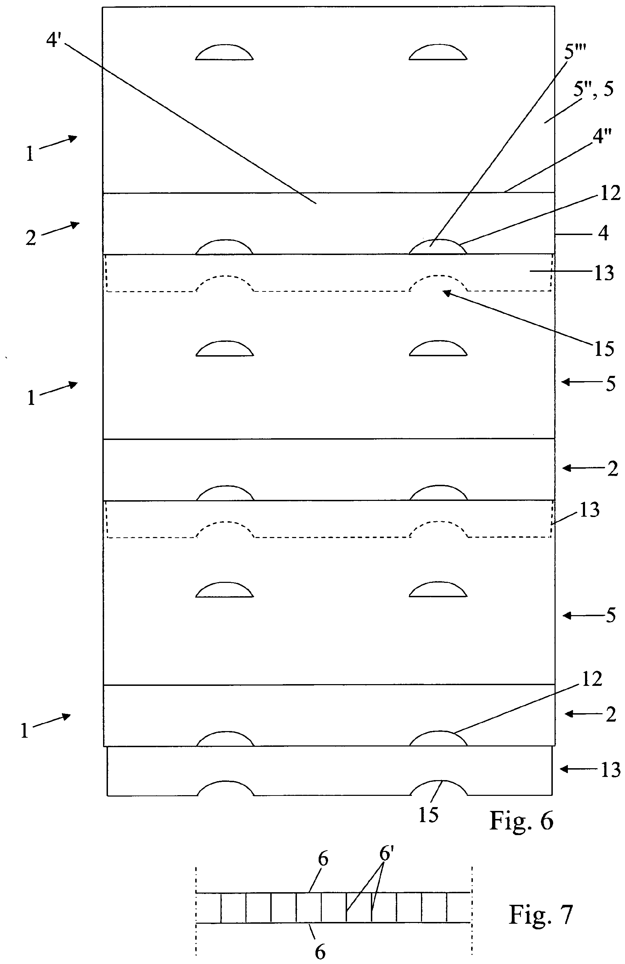

A titre d'exemple, lorsque le matériau plan creux formant le bac 2, le manchon 5 et les structures de piétement 13 consistent en un profilé extrudé avec une constitution telle que représentée sur la figure 7, le flanc 2' constituant le bac 2 peut présenter une épaisseur totale d'environ 3,5 mm et d'un grammage d'environ 1 000 g/m², le flanc 5' constituant le manchon 5 formant ridelle peut présenter une épaisseur totale d'environ 3,5 mm et d'un grammage d'environ 800 g/m², et les flancs 13' constituant chacun une structure de piétement 13 peuvent une épaisseur totale d'environ 5 mm et un grammage d'environ 1 050 g/m².

Par ailleurs, les trois composantes constitutives du contenant 1, à savoir, le bac 2, le manchon 5 et les structures de piétement 12 peuvent éventuellement présenter des colorations différentes, le bac 2 présentant une coloration proche de celle du complexe de culture 17 ou de la couche supérieure de ce dernier.

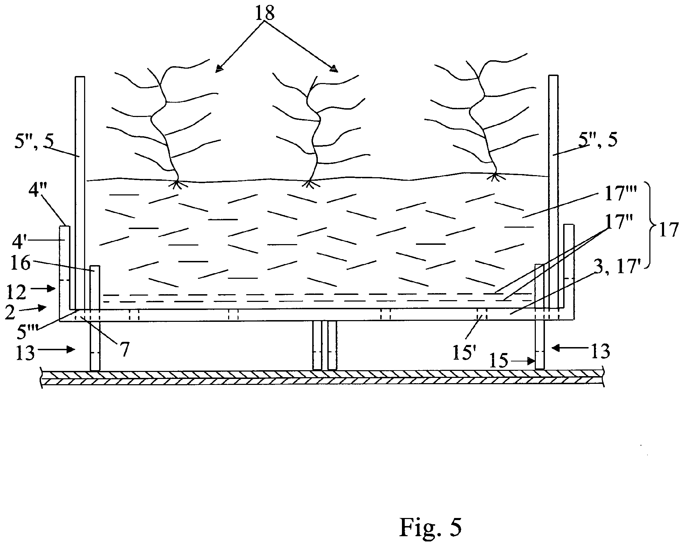

La présente invention a également pour objet, comme le montre partiellement la figure 5 des dessins annexés, un système de végétalisation de surfaces non accessibles, en particulier de toitures horizontales ou au moins légèrement en pente (éventuellement avec des degrés d'inclinaison importants), lesdites surfaces étant étanches à l'eau et, le cas échéant, isolées thermiquement.

Ce système est caractérisé en ce qu'il comprend une pluralité de modules cultivés disposés de manière mutuellement adjacente sur ladite surface.

Conformément à un premier mode de réalisation de ce système selon l'invention, chaque module étant constitué d'un bac 2, éventuellement monté sur au moins une structure de piétement 13, faisant partie d'un contenant 1 tel que décrit ci-dessus et empli d'un complexe de culture 17 dans lequel sont plantés des végétaux persistants 18 et préférentiellement à besoins limités, préférentiellement des plantes vivaces, la hauteur du complexe de culture 17 dépassant celle des parois latérales 4 et 4' du bac 2.

En variante et en accord avec un second mode de réalisation de l'invention, chaque module peut être constitué d'un contenant 1, tel que décrit ci-dessus, au moins le manchon 5 étant réalisé en un matériau biodégradable, ainsi qu'éventuellement les parois latérales 4, 4' du bac 3, chacun desdits contenants 1 étant empli d'un complexe de culture 17 dans lequel sont plantés des végétaux persistants 18 et à besoins limités, préférentiellement des plantes vivaces.

Enfin, l'invention concerne également un procédé de réalisation d'une végétalisation de toitures horizontale ou en pente, notamment d'un système de végétalisation tel que décrit ci-dessus.

Ce procédé est caractérisé en ce qu'il consiste :
- à fournir des contenants 1 tels que décrit précédemment, comprenant chacun un bac 2, un corps en forme de manchon 5 monté sur ce bac 2 et éventuellement une ou des structure(s) de piétement 13, à emplir lesdits contenants 1 avec une hauteur de complexe de culture 17 supérieure à la largeur ou hauteur des parois latérales 4 et 4' des bacs 2 des contenants 1,
- à ensemencer lesdits contenants 1 et à laisser pousser les plantes 18 résultantes jusqu'à un degré de développement déterminé, préférentiellement avec une hauteur inférieure au bord supérieure des corps en forme de manchons 5 des contenants 1,
- à transporter lesdits contenants 1 cultivés sur le site à végétaliser en les gerbant ou en les arrangeant dans des conteneurs à étagères,
- à désempiler ou à extraire les contenants 1 sur site et à les disposer côte à côte, avec contact mutuel, sur la surface à recouvrir, avant ou après enlèvement ou non des corps en forme de manchons 5.

En relation avec l'un quelconque des deux modes de réalisation, il peut être prévu qu'avant leur transport sur site, les contenants 1 précultivés sont conditionnés, par exemple sur palettes, en réalisant préalablement des empilements par gerbage de plusieurs contenants 1, le bac 2 d'un contenant 1 supérieur reposant sur le corps en forme de manchon 5 du contenant 1 immédiatement inférieur.

Lorsque les bacs 2 sont moulés, les contenants 1 précultivés peuvent également être arrangés, sans gerbage, dans des conteneurs de transport, en étant maintenus latéralement au niveau des bacs 2.

En particulier lorsque les manchons 5 ne sont pas biodégradables, le procédé peut consister également, après mise en place des contenants 1 sur site et enlèvement des manchons 5, à récupérer ces derniers en vue de leur recyclage ou de leur réutilisation, après dépliement et aplatissement.

Le complexe de culture 17 pourra être de différente nature en fonction des végétaux plantés et éventuellement intégrer un sous-complexe de culture, par exemple sous la forme d'une feuille hydrorétentrice souple.

En relation avec l'exemple représenté sur la figure 5, le complexe de culture 17 peut présenter plusieurs couches superposées, à savoir, de bas en haut (depuis le fond 3 du bac 2), une couche drainante 17' formée par le fond ajouré du bac 2, une couche filtrante 17" (par exemple un feutre hydrorétenteur) et une couche de culture 17"' dans laquelle sont enracinées les plantes 18.

La structure de piétement 13 permet de fournir un moyen de stockage d'eau temporaire (régulation du réseau d'assainissement) et repose généralement sur un support étanche, par exemple revêtu d'un complexe d'étanchéité bitumineux.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention défini par les revendications suivantes.

## Revendications

1. Contenant modulaire de plantation et de culture, essentiellement constitué par un bac rectangulaire avec un fond plat ou nervuré et des parois latérales et par un corps en forme de manchon rectangulaire monté de manière amovible sur et/ou dans ledit bac et s'étendant, à l'état monté, au-delà des bords supérieurs des parois latérales du bac,
contenant (1) **caractérisé**
**en ce qu'**au moins le manchon (5) est réalisé en un matériau plan creux constitué d'au moins deux feuilles (6) reliées par une structure d'entretoisement (6'),
**en ce qu'**au moins deux des parois (5", 5"") formant le manchon (5), préférentiellement au moins deux parois (5") longitudinales opposées de ce dernier, sont pourvues d'au moins une languette ou patte d'ancrage (7) au niveau de leurs bords inférieurs (5"'), et
**en ce que** le fond (3) du bac (2) est pourvu d'au moins deux découpes (8) en forme de fentes, s'étendant chacune le long d'une des parois latérales (4, 4') dudit bac (2) et destinée à recevoir ladite ou une des languettes ou pattes d'ancrage (7), lorsque la paroi (5") concernée du manchon (5) repose sur ledit fond (3).

2. Contenant selon la revendication 1, **caractérisé en ce que** le bac (2) est également réalisé en un matériau plan creux constitué d'au moins deux feuilles (6) reliées par une structure d'entretoisement (6'), le bac (2) et le manchon (5) consistant chacun en un article obtenu par pliage d'un flanc découpé respectif (2', 5') de matériau plan creux d'un seul tenant.

3. Contenant selon la revendication 1, **caractérisé en ce que** le bac (2) consiste en un bac venu de moulage, préférentiellement comme pièce finie d'un seul tenant.

4. Contenant selon l'une quelconque des revendications 1 et 2, **caractérisé en ce qu'**au moins certaines des parois (5", 5"") formant le manchon (5), préférentiellement au moins deux parois (5"") transversales opposées de ce dernier, sont pourvues d'au moins une languette ou patte d'ancrage (9) au niveau de leurs bords inférieurs (5"') et **en ce qu'**au moins deux parois latérales (4, 4') du bac (2), préférentiellement au moins deux parois latérales (4) transversales opposées de ce dernier, sont constituées par des ailes (10) repliées sur elles-mêmes, préférentiellement avec prise en sandwich d'ailes (10') pliées prolongeant les deux autres parois latérales (4') du bac, et comportent chacune au moins une découpe (11) en forme de fente au niveau de leur bord supérieur (4"), destinée à recevoir ladite ou une des languettes ou pattes d'ancrage (9) lorsque la paroi (5"") concernée du manchon (5) repose sur ledit bord (4").

5. Contenant selon l'une quelconque des revendications 1 et 4, **caractérisé en ce qu'**au moins certaines des parois (5", 5"") formant le manchon (5), préférentiellement au moins deux parois (5"") transversales opposées de ce dernier, sont pourvues d'au moins une languette ou patte d'ancrage (9) au niveau de leurs bords inférieurs (5"') et **en ce qu'**au moins deux parois latérales (4, 4') du bac (2), préférentiellement au moins deux parois latérales (4) transversales opposées de ce dernier, comportent chacune au moins une fente (11) au niveau de leur bord supérieur respectif (4") ou à proximité de ce dernier, sous la forme d'une découpe ou d'un interstice plan entre la face interne ou externe de ladite paroi (4) et une aile (4"') formée sur cette dernière et s'étendant parallèlement à elle, chacune desdites fentes (11) étant destinée à recevoir ladite ou une des languettes ou pattes d'ancrage (9) lorsque le manchon (5) est monté sur et/ou dans le bac (2).

6. Contenant selon la revendication 4 ou 5, **caractérisé en ce que** le manchon (5) présente, à l'état monté, au moins deux parois latérales opposées (5") qui reposent sur le fond (3) du bac (2) et qui sont en contact surfacique avec les faces internes des parois latérales (4') opposées correspondantes du bac (2), les deux autres parois opposées (5") du manchon (5) reposant éventuellement sur les bords supérieurs (4") des autres parois latérales opposées (4) du bac (2), les languettes ou pattes d'ancrage (7 et 11) étant engagées dans les découpes de réception correspondantes respectives (8 et 11) du fond (3) et des parois latérales (4) concernées du bac (2).

7. Contenant selon la revendication 4 ou 6, **caractérisé en ce que** les parois latérales du bac (2) consistant en des ailes repliées (10) de la partie de flanc (2') constituant le fond (3) et présentant des découpes en forme de fente (11) au niveau de leurs bords supérieurs (4"), correspondent aux parois latérales (4) de plus faible dimension du bac (2) rectangulaire.

8. Contenant selon l'une quelconque des revendications 1 à 7, **caractérisé en ce que** le fond (3) et les bases des parois latérales (4 et 4') du bac (2) sont pourvus de découpes (12) formant des ouvertures traversantes, les découpes des bases des parois latérales (4') étant éventuellement formées dans le prolongement des découpes en forme de fentes (8) du fond (3) du bac (2) recevant les ou certaines des languettes d'ancrage (7) du manchon (5).

9. Contenant selon l'une quelconque des revendications 1 à 8, **caractérisé en ce qu'**il comporte également au moins une structure de piétement (13) s'étendant sous le bac (2), formée d'un seul tenant avec ledit bac (2) ou reliée à ce dernier au niveau de sites de fixation (14) ménagés dans le fond (3) et présentant des ajours (15) autorisant la circulation de liquide sous ledit bac (2).

10. Contenant selon la revendication 9, **caractérisé en ce que** la ou chaque structure de piétement (13) consiste en un manchon ou cadre obtenu par pliage en une structure fermée sur elle-même d'une bande (13') de matériau plan creux d'un seul tenant et présentant, d'une part, des découpes (15) formant des ajours au niveau de son bord inférieur destiné à venir en appui sur le support recevant le contenant (1) et, d'autre part, des languettes ou pattes d'assemblage (16) pourvues de moyens d'accrochage (16'), par exemple du type crochet ou épaulement, et s'engageant avec venue en prise dans les sites de fixation (14) ménagés dans le fond (3) du bac (2).

11. Contenant selon l'une quelconque des revendications 1 à 10, **caractérisé en ce que** le matériau plan creux consiste en du carton ondulé, enduit d'une couche ou revêtu d'un parement étanche, la structure d'entretoisement (6') étant formée par une feuille ondulée définissant des parois reliées aux deux feuilles de parement (6).

12. Contenant selon l'une quelconque des revendications 1 à 11, **caractérisé en ce que** le matériau plan creux consiste en un profilé extrudé de polymère thermoplastique, la structure d'entretoisement (6') étant constituée par des parois perpendiculaires reliant les deux feuilles (6) formant les faces opposées du matériau.

13. Contenant selon la revendication 11 ou 12, **caractérisé en ce que** le flanc (5') formant le manchon (5) est découpé et plié de telle manière que les parois d'entretoisement (6') s'étendent dans la direction transversale par rapport aux plans des parois (5", 5"") dudit manchon (5).

14. Contenant selon la revendication 11 ou 12, **caractérisé en ce que** le flanc (2') formant le bac (2) est découpé et plié de telle manière que les parois d'entretoisement (6') s'étendent dans la direction longitudinale pour le fond (3) du bac (2) et dans la direction transversale par rapport aux plans respectifs des parois latérales (4, 4') du bac (2).

15. Contenant selon l'une quelconque des revendications 11 à 14, **caractérisé en ce que** le bac (2), le corps en forme de manchon (5) et, le cas échéant, la ou les structure(s) de piétement (13) sont réalisées en des matériaux plan creux de natures différentes.

16. Contenant selon la revendication 15, **caractérisé en ce que** le matériau plan formant le corps supérieur amovible en forme de manchon (5) présente une constitution moins rigide, et éventuellement un grammage moins élevé, que le matériau plan formant le bac (2), et éventuellement la structure de piétement (13).

17. Contenant selon la revendication 3 et l'une quelconque des revendications 5 à 13, **caractérisé en ce que** le bac (2) moulé, par exemple par injection ou thermoformage, est réalisé en un matériau polymère thermoplastique ou thermodur, renforcé ou non par des charges fibreuses ou autres, en particulier en un matériau choisi dans le groupe formé par le polyester, le polyéthylène haute densité et le polypropylène.

18. Contenant selon la revendication 3 et l'une quelconque des revendications 5 à 13 et 17, **caractérisé en ce qu'**au moins deux parois latérales (4, 4') opposées du bac (2) moulé par injection ou thermoformé, de forme rectangulaire, préférentiellement les quatre parois latérales (4, 4'), présentent des déformations locales rentrantes (19) qui définissent des renfoncements sur les faces latérales extérieures du bac (2), pouvant servir de poignées de préhension du contenant (1).

19. Contenant selon la revendication 3 et l'une quelconque des revendications 5 à 13, 17 et 18, **caractérisé en ce que** la paroi du fond (3) du bac (2), moulé par injection ou thermoformé, est pourvue de déformations locales (20), préférentiellement à extension linéaire dans les directions longitudinale et transversale dudit bac (2), définissant des nervures creuses proéminentes par rapport à la face intérieure dudit fond (3), préférentiellement à section semi-circulaire, ces nervures (20) étant avantageusement pourvues d'ajours (20') sous forme de fentes transversales.

20. Contenant selon l'une quelconque des revendications 1 à 19, **caractérisé en ce que** le manchon (5) rectangulaire est pourvu au niveau de ses coins de projections rentrantes (21), par exemple obtenus par déformation locale par pliage de portions découpées du flanc (5') de matériau plan creux constituant ledit manchon (5), ces projections (21) correspondant à des sites d'appui pour le bac (2) ou le piétement (13) du contenant (1) supérieur lors du gerbage ou de l'empilement de plusieurs contenants (1).

21. Contenant selon l'une quelconque des revendications 1 à 20, **caractérisé en ce que** le bord supérieur du manchon (5) est pourvu de portions proéminentes (22), par exemple en forme de languettes, et **en ce que** le bac (2) est pourvu, au niveau d'au moins deux parois latérales (4, 4') opposées, de renfoncements ou de retraits (22') de forme sensiblement complémentaire auxdites portions proéminentes (22), lesdites portions (22) venant en engagement dans les renfoncements ou retraits (22') du bac (2) du contenant (1) supérieur en cas d'empilement avec gerbage de plusieurs contenants (1).

22. Contenant selon l'une quelconque des revendications 1 à 21, **caractérisé en ce que** le matériau constituant le bac (2) et/ou le matériau constituant le manchon (5) sont de nature biodégradable.

23. Procédé de réalisation d'une végétalisation de toitures horizontales ou en pente, **caractérisé en ce qu'**il consiste à fournir des contenants (1) selon l'une quelconque des revendications 1 à 22, comprenant chacun un bac (2), un corps en forme de manchon (5) monté sur ce bac (2) et éventuellement une ou des structure(s) de piétement (13), à emplir lesdits contenants (1) avec une hauteur de complexe de culture (17) supérieure à la largeur ou hauteur des parois latérales (4 et 4') des bacs (2) des contenants (1), à ensemencer lesdits contenants (1) et à laisser pousser les plantes (18) résultantes jusqu'à un degré de développement déterminé, préférentiellement avec une hauteur inférieure au bord supérieure des corps en forme de manchons (5) des contenants (1), à transporter lesdits contenants (1) cultivés sur le site à végétaliser en les gerbant ou en les arrangeant dans des conteneurs à étagères, à désempiler ou à extraire les contenants (1) sur site et à les disposer côte à côte, avec contact mutuel, sur la surface à recouvrir, avant ou après enlèvement ou non des corps en forme de manchons (5).

24. Procédé selon la revendication 23, **caractérisé en ce qu'**avant leur transport sur site, les contenants (1) précultivés sont conditionnés, par exemple sur palettes, en réalisant préalablement des empilements par gerbage de plusieurs contenants (1), le bac (2) d'un contenant (1) supérieur reposant sur le corps en forme de manchon (5) du contenant (1) immédiatement inférieur.

25. Procédé selon l'une quelconque des revendications 23 et 24, **caractérisé en ce qu'**il consiste également, après mise en place des contenants (1) sur site et enlèvement des manchons (5), à récupérer ces derniers en vue de leur recyclage ou de leur réutilisation, après dépliement et aplatissement.

26. Système de végétalisation de surfaces non accessibles, en particulier de toitures horizontales ou au moins légèrement en pente, lesdites surfaces étant étanches à l'eau et, le cas échéant, isolées thermiquement, système **caractérisé en ce qu'**il est obtenu par l'intermédiaire du procédé selon l'une quelconque des revendications 23 à 25 et **en ce qu'**il comprend une pluralité de modules cultivés disposés de manière mutuellement adjacente sur ladite surface, chaque module étant constitué d'un bac (2), éventuellement monté sur au moins une structure de piétement (13), faisant partie d'un contenant (1) selon l'une quelconque des revendications 1 à 22 et empli d'un complexe de culture (17) dans lequel sont plantés des végétaux persistants (18) et à besoins limités, préférentiellement des plantes vivaces, la hauteur du complexe de culture (17) dépassant celle des parois latérales (4 et 4') du bac (2).

27. Système de végétalisation de surfaces non accessibles, en particulier de toitures horizontales ou au moins légèrement en pente, lesdites surfaces étant étanches à l'eau et, le cas échéant, isolées thermiquement, système **caractérisé en ce qu'**il est obtenu par l'intermédiaire du procédé selon l'une quelconque des revendications 23 et 24 et **en ce qu'**il comprend une pluralité de modules cultivés disposés de manière mutuellement adjacente sur ladite surface, chaque module étant constitué d'un contenant (1) selon l'une quelconque des revendications 1 à 22, au moins le manchon (5) étant réalisé en un matériau biodégradable, ainsi qu'éventuellement les parois latérales (4, 4') du bac (3), chacun desdits contenants (1) étant empli d'un complexe de culture (17) dans lequel sont plantés des végétaux persistants (18) et à besoins limités, préférentiellement des plantes vivaces.

## Patentansprüche

1. Modularer Pflanz- und Kultivierungsbehälter, der im Wesentlichen durch eine rechteckige Wanne mit einem flachen oder gerippten Boden und Seitenwänden sowie durch einen Körper in Form einer rechteckigen Hülse, die abnehmbar auf und/oder in der Wanne montiert ist und sich im montierten Zustand über die oberen Ränder der Seitenwände der Wanne hinaus erstreckt, ausgebildet ist,
wobei der Behälter (1) **dadurch gekennzeichnet ist,**
**dass** zumindest die Hülse (5) aus einem Hohlflachmaterial hergestellt ist, das aus zumindest zwei Platten (6) ausgebildet ist, die durch eine Abstandsstruktur (6') verbunden sind,
**dass** zumindest zwei der die Hülse (5) ausbildenden Wände (5", 5""), vorzugsweise zumindest zwei gegenüberliegende Längswände (5") der Hülse (5), an ihren unteren Rändern (5'") mit zumindest einer Verankerungszunge oder Verankerungslasche (7) versehen sind, und
**dass** der Boden (3) der Wanne (2) mit zumindest zwei schlitzförmigen Ausschnitten (8) versehen ist, die sich jeweils entlang einer der Seitenwände (4, 4') des Behälters (2) erstrecken und dazu bestimmt sind, die oder eine der Verankerungszungen oder Verankerungslaschen (7) aufzunehmen, wenn die betreffende Wand (5") der Hülse (5) auf dem Boden (3) aufliegt.

2. Behälter nach Anspruch 1, **dadurch gekennzeichnet, dass** die Wanne (2) ebenfalls aus einem Hohlflachmaterial hergestellt ist, das aus zumindest zwei Platten (6) ausgebildet ist, die durch eine Abstandsstruktur (6') verbunden sind, wobei die Wanne (2) und die Hülse (5) jeweils aus einem Gegenstand ausgebildet sind, der durch Falten eines entsprechenden Faltzuschnitts (2', 5') aus einstückigem Hohlflachmaterial erhalten wird.

3. Behälter nach Anspruch 1, **dadurch gekennzeichnet, dass** die Wanne (2) aus einer durch Formung erhaltenen Wanne ausgebildet ist, vorzugsweise als einstückiges Fertigteil.

4. Behälter nach einem der Ansprüche 1 und 2, **dadurch gekennzeichnet, dass** zumindest einige der die Hülse (5) ausbildenden Wände (5", 5""), vorzugsweise zumindest zwei gegenüberliegende Querwände (5"") der Hülse (5), an ihren unteren Rändern (5'") mit zumindest einer Verankerungszunge oder Verankerungslasche (9) versehen sind, und dass zumindest zwei Seitenwände (4, 4') der Wanne (2), vorzugsweise zumindest zwei gegenüberliegende Querseitenwände (4) der Wanne (2), durch auf sich selbst zurückgefaltete Flügel (10) ausgebildet sind, vorzugsweise mit sandwichartig gefalteten Flügeln (10'), die die beiden anderen Seitenwände (4') der Wanne verlängern, und jeweils an ihrem oberen Rand (4") zumindest einen schlitzförmigen Ausschnitt (11) aufweisen, der dazu bestimmt ist, die oder eine der Verankerungszungen oder Verankerungslaschen (9) aufzunehmen, wenn die betreffende Wand (5"") der Hülse (5) auf dem Rand (4") aufliegt.

5. Behälter nach einem der Ansprüche 1 und 4, **dadurch gekennzeichnet, dass** zumindest einige der die Hülse (5) ausbildenden Wände (5", 5""), vorzugsweise zumindest zwei gegenüberliegende Querwände (5"") der Hülse (5), an ihren unteren Rändern (5'") mit zumindest einer Verankerungszunge oder Verankerungslasche (9) versehen sind, und dass zumindest zwei Seitenwände (4, 4') der Wanne (2), vorzugsweise zumindest zwei gegenüberliegende Querseitenwände (4) der Wanne (2), jeweils zumindest einen Schlitz (11) an oder in der Nähe ihres jeweiligen oberen Randes (4") in Form eines Ausschnitts oder eines flachen Spalts zwischen der Innenfläche oder der Außenfläche der Wand (4) und einem an dieser ausgebildeten und sich parallel zu dieser erstreckenden Flügel (4"') aufweisen, wobei jeder der Schlitze (11) dazu bestimmt ist, die oder eine der Verankerungszungen oder Verankerungslaschen (9) aufzunehmen, wenn die Hülse (5) auf und/oder in der Wanne (2) montiert ist.

6. Behälter nach Anspruch 4 oder 5, **dadurch gekennzeichnet, dass** die Hülse (5) im montierten Zustand zumindest zwei gegenüberliegende Seitenwände (5") aufweist, die auf dem Boden (3) der Wanne (2) aufliegen und die in Flächenkontakt mit den Innenflächen der entsprechenden gegenüberliegenden Seitenwände (4') der Wanne (2) stehen, wobei die beiden anderen gegenüberliegenden Wände (5") der Hülse (5) gegebenenfalls auf den oberen Rändern (4") der anderen gegenüberliegenden Seitenwände (4) der Wanne (2) aufliegen, wobei die Verankerungszungen oder Verankerungslaschen (7 und 11) in die jeweils entsprechenden Aufnahmeausschnitte (8 und 11) des Bodens (3) und der betreffenden Seitenwände (4) der Wanne (2) eingeführt sind.

7. Behälter nach Anspruch 4 oder 6, **dadurch gekennzeichnet, dass** die Seitenwände der Wanne (2), die aus gefalteten Flügeln (10) des den Boden (3) ausbildenden Faltzuschnittteils (2') ausgebildet sind, und die an ihren oberen Rändern (4") schlitzförmige Ausschnitte (11) aufweisen, den kleineren Seitenwänden (4) der rechteckigen Wanne (2) entsprechen.

8. Behälter nach einem der Ansprüche 1 bis 7, **dadurch gekennzeichnet, dass** der Boden (3) und die Sockel der Seitenwände (4 und 4') der Wanne (2) mit Ausschnitten (12) versehen sind, die Durchgangsöffnungen ausbilden, wobei die Ausschnitte der Sockel der Seitenwände (4') gegebenenfalls in der Verlängerung der schlitzförmigen Ausschnitte (8) des Bodens (3) der Wanne (2) ausgebildet sind, die die oder einige der Verankerungszungen (7) der Hülse (5) aufnehmen.

9. Behälter nach einem der Ansprüche 1 bis 8, **dadurch gekennzeichnet, dass** dieser außerdem zumindest eine sich unter der Wanne (2) erstreckende Untergestellstruktur (13) aufweist, die einstückig mit der Wanne (2) ausgebildet oder mit dieser an im Boden (3) vorgesehenen Befestigungsstellen (14) verbunden ist und Öffnungen (15) aufweist, die die Zirkulation von Flüssigkeit unter der Wanne (2) ermöglichen.

10. Behälter nach Anspruch 9, **dadurch gekennzeichnet, dass** die oder jede Untergestellstruktur (13) aus einer Hülse oder einem Rahmen ausgebildet ist, die bzw. der durch Falten eines Streifens (13') aus einstückigem Hohlflachmaterial zu einer in sich geschlossenen Struktur erhalten wird, und einerseits Ausschnitte (15) aufweist, die an dem unteren Rand des Behälters (1) Öffnungen ausbilden, die dazu bestimmt sind, auf der den Behälter (1) aufnehmenden Abstützung zur Auflage zu kommen, und andererseits Montagezungen oder Montagelaschen (16), die mit Rastmitteln (16'), beispielsweise vom Hakentyp oder Schultertyp, versehen sind und in die im Boden (3) des Behälters (2) vorgesehenen Befestigungsstellen (14) eingreifen.

11. Behälter nach einem der Ansprüche 1 bis 10, **dadurch gekennzeichnet, dass** das Hohlflachmaterial aus Wellpappe ausgebildet ist, die mit einer Schicht beschichtet oder mit einer wasserdichten Verkleidung verkleidet ist, wobei die Abstandsstruktur (6') durch einen gewellten Bogen ausgebildet wird, die mit den beiden Verkleidungsplatten (6) verknüpften Wände definierend.

12. Behälter nach einem der Ansprüche 1 bis 11, **dadurch gekennzeichnet, dass** das Hohlflachmaterial aus einem Strangpressprofil aus thermoplastischem Polymer ausgebildet ist, wobei die Abstandsstruktur (6') durch senkrechte Wände ausgebildet wird, die die beiden Platten (6) verbinden, die die gegenüberliegenden Flächen des Materials ausbilden.

13. Behälter nach Anspruch 11 oder 12, **dadurch gekennzeichnet, dass** der die Hülse (5) ausbildende Faltzuschnitt (5') so ausgeschnitten und gefaltet ist, dass sich die Abstandswände (6') in der Querrichtung zu den Ebenen der Wände (5", 5"") der Hülse (5) erstrecken.

14. Behälter nach Anspruch 11 oder 12, **dadurch gekennzeichnet, dass** der die Wanne (2) ausbildende Faltzuschnitt (2') so ausgeschnitten und gefaltet ist, dass sich die Abstandswände (6') in Längsrichtung für den Boden (3) der Wanne (2) und in Querrichtung zu den jeweiligen Ebenen der Seitenwände (4, 4') der Wanne (2) erstrecken.

15. Behälter nach einem der Ansprüche 11 bis 14, **dadurch gekennzeichnet, dass** die Wanne (2), der hülsenförmige Körper (5) und gegebenenfalls die Untergestellstruktur(en) (13) aus Hohflachmaterialien unterschiedlicher Arten hergestellt sind.

16. Behälter nach Anspruch 15, **dadurch gekennzeichnet, dass** das Flachmaterial, das den abnehmbaren hülsenförmigen Oberkörper (5) ausbildet, eine weniger steife Beschaffenheit und gegebenenfalls ein geringeres Flächengewicht als das Flachmaterial aufweist, das die Wanne (2) und gegebenenfalls die Untergestellstruktur(en) (13) ausbildet.

17. Behälter nach Anspruch 3 und einem der Ansprüche 5 bis 13, **dadurch gekennzeichnet, dass** die beispielsweise durch Spritzgießen oder Thermoformen geformte Wanne (2) aus einem thermoplastischen oder thermoduren polymeren Material hergestellt ist, das verstärkt oder nicht verstärkt ist durch faserige oder andere Füllstoffe, insbesondere aus einem Material, das aus der Gruppe ausgewählt ist, die aus Polyester, hochdichtem Polyethylen und Polypropylen ausgebildet ist.

18. Behälter nach Anspruch 3 und einem der Ansprüche 5 bis 13 und 17, **dadurch gekennzeichnet, dass** zumindest zwei gegenüberliegende Seitenwände (4, 4') der spritzgussgeformten oder thermogeformten Wanne (2) von rechteckiger Form, vorzugsweise alle vier Seitenwände (4, 4'), lokale Einwärtsverformungen (19) aufweisen, die Ausnehmungen an den äußeren Seitenflächen der Wanne (2) festlegen, die als Handgriffe für den Behälter (1) dienen können.

19. Behälter nach Anspruch 3 und einem der Ansprüche 5 bis 13, 17 und 18, **dadurch gekennzeichnet, dass** die spritzgussgeformte oder thermogeformte Wand des Bodens (3) der Wanne (2) mit lokalen Verformungen (20) versehen ist, vorzugsweise mit linearer Ausdehnung in Längsrichtung und Querrichtung der Wanne (2), die Hohlrippen festlegen, die von der Innenfläche des Bodens (3) hervorstehen, vorzugsweise mit halbkreisförmigem Querschnitt, wobei diese Rippen (20) vorteilhafterweise mit Öffnungen (20') in Form von Querschlitzen versehen sind.

20. Behälter nach einem der Ansprüche 1 bis 19, **dadurch gekennzeichnet, dass** die rechteckige Hülse (5) an ihren Ecken mit Einwärtsvorsprüngen (21) versehen ist, die beispielsweise durch lokale Verformung durch Falten von Schnittabschnitten des Faltzuschnitts (5') aus Hohlflachmaterial, das die Hülse (5) ausbildet, erhalten werden, wobei diese Vorsprünge (21) den Auflageflächen für die Wanne (2) oder für das Untergestell (13) des oberen Behälters (1) beim Ineinandersetzen oder Stapeln mehrerer Behälter (1) entsprechen.

21. Behälter nach einem der Ansprüche 1 bis 20, **dadurch gekennzeichnet, dass** der obere Rand der Hülse (5) mit hervorstehenden Abschnitten (22), beispielsweise in Form von Zungen, versehen ist, und dass die Wanne (2) an zumindest zwei gegenüberliegenden Seitenwänden (4, 4') mit Ausnehmungen oder Vertiefungen (22') mit einer zu den hervorstehenden Abschnitten (22) im Wesentlichen komplementären Form versehen ist, wobei die Abschnitte (22) im Falle eines Stapelns durch Ineinandersetzen mehrerer Behälter (1) in die Ausnehmungen oder Vertiefungen (22') der Wanne (2) des oberen Behälters (1) eingreifen.

22. Behälter nach einem der Ansprüche 1 bis 21, **dadurch gekennzeichnet, dass** das Material, das die Wanne (2) ausbildet, und/oder das Material, das die Hülse (5) ausbildet, naturgemäß biologisch abbaubar ist.

23. Verfahren zur Durchführung von Begrünungen von horizontalen oder geneigten Dächern, **dadurch gekennzeichnet, dass** es umfasst, Behälter (1) nach einem der Ansprüche 1 bis 22 bereitzustellen, die jeweils eine Wanne (2), einen hülsenförmigen Körper (5), der auf der Wanne (2) montiert ist, und gegebenenfalls eine oder mehrere Untergestellstrukturen (13) umfassen, die Behälter (1) mit einer Höhe des Kulturkomplexes (17) zu füllen, die größer ist als die Breite oder die Höhe der Seitenwände (4 und 4') der Wannen (2) der Behälter (1), die Behälter (1) zu besäen und die sich daraus ergebenden Pflanzen (18) bis zu einer festgelegten Entwicklungsstufe wachsen zu lassen, vorzugsweise mit einer Höhe, die niedriger ist als der obere Rand der hülsenförmigen Körper (5) der Behälter (1), die kultivierten Behälter (1) zu der zu begrünenden Fläche durch Stapeln oder Anordnen in Regalcontainern zu transportieren, die Behälter (1) zu entstapeln oder am Standort zu entnehmen, und die Behälter (1) nebeneinander, mit gegenseitigem Kontakt, auf der zu bedeckenden Fläche anzuordnen, vor oder nach Entfernen oder Nicht-Entfernen der hülsenförmigen Körper (5).

24. Verfahren nach Anspruch 23, **dadurch gekennzeichnet, dass** die vorkultivierten Behälter (1) vor ihrem Transport zum Standort durch vorheriges Stapeln durch Ineinandersetzen mehrerer Behälter (1), beispielsweise auf Paletten, abgepackt werden, wobei die Wanne (2) eines oberen Behälters (1) auf dem hülsenförmigen Körper (5) des unmittelbar unteren Behälters (1) aufliegt.

25. Verfahren nach einem der Ansprüche 23 und 24, **dadurch gekennzeichnet, dass** es außerdem umfasst, nach Aufstellen der Behälter (1) am Standort und Entfernen der Hülsen (5) diese im Hinblick auf ihre Wiederverwertung oder ihre Wiederverwendung nach dem Entfalten und Abflachen wiederzugewinnen.

26. System zur Begrünung von nicht zugänglichen Flächen, insbesondere von horizontalen oder zumindest leicht geneigten Dächern, wobei die Flächen wasserdicht und erforderlichenfalls wärmeisoliert sind, **dadurch gekennzeichnet, dass** es mittels des Verfahrens nach einem der Ansprüche 23 bis 25 erhalten wird und dass es eine Vielzahl von kultivierten Modulen umfasst, die einander benachbart auf der Fläche angeordnet sind, wobei jedes Modul aus einer Wanne (2) ausgebildet ist, die gegebenenfalls auf zumindest einer Untergestellstruktur (13) montiert ist, die Teil eines Behälters (1) nach einem der Ansprüche 1 bis 22 ist, und mit einem Kulturkomplex (17) gefüllt ist, in den immergrüne Pflanzen (18) und Pflanzen mit begrenztem Bedarf, vorzugsweise mehrjährige Pflanzen, gepflanzt werden, wobei die Höhe des Kulturkomplexes (17) die Höhe der Seitenwände (4 und 4') der Wanne (2) übersteigt.

27. System zur Begrünung von nicht zugänglichen Flächen, insbesondere von horizontalen oder zumindest leicht geneigten Dächern, wobei die Flächen wasserdicht und erforderlichenfalls wärmeisoliert sind, **dadurch gekennzeichnet, dass** es mittels des Verfahrens nach einem der Ansprüche 23 und 24 erhalten wird und dass es eine Vielzahl von kultivierten Modulen umfasst, die einander benachbart auf der Fläche angeordnet sind, wobei jedes Modul aus einem Behälter (1) nach einem der Ansprüche 1 bis 22 ausgebildet ist, wobei zumindest die Hülle (5) aus einem biologisch abbaubaren Material hergestellt ist sowie gegebenenfalls die Seitenwände (4, 4') der Wanne (3), wobei jeder der Behälter (1) mit einem Kulturkomplex (17) gefüllt ist, in dem immergrüne Pflanzen (18) und Pflanzen mit begrenztem Bedarf, vorzugsweise mehrjährige Pflanzen, gepflanzt werden.

## Claims

1. Modular container for planting and cultivation, essentially consisting of a rectangular planter with a flat or ribbed bottom and side walls and a body in the shape of a rectangular sleeve that is mounted in a removable manner on and/or in said planter and extending, in the mounted state, beyond the upper edges of the side walls of the planter,
a container (1) that is **characterised in that**
at least the sleeve (5) is made from a hollow flat material that consists of at least two sheets (6) that are connected by a bracing structure (6'),
**in that** at least two of the walls (5", 5"") that form the sleeve (5), preferably at least two longitudinal walls (5") opposite the latter, are provided with at least one tab or anchoring lug (7) on their lower edges (5"') and
**in that** the bottom (3) of the planter (2) is provided with at least two slot-shaped cut-outs (8), each extending along one of the side walls (4, 4') of said planter (2) and designed to accommodate said or one of the tabs or anchoring lugs (7) when the wall (5") in question of the sleeve (5) rests on said bottom (3).

2. Container according to claim 1, **characterised in that** the planter (2) is also made from a hollow flat material formed by at least two sheets (6) that are connected by a bracing structure (6'), the planter (2) and the sleeve (5) each consisting of an article that is obtained by folding a respective cut-out side (2', 5') of hollow flat material in one piece.

3. Container according to claim 1, **characterised in that** the planter (2) consists of a planter that is produced by moulding, preferably as a one-piece finished part.

4. Container according to any of claims 1 and 2, **characterised in that** at least some of the walls (5", 5"") that form the sleeve (5), preferably at least two transverse walls (5"") opposite the latter, are provided with at least one tab or anchoring lug (9) on their lower edges (5"') and **in that** at least two side walls (4, 4') of the planter (2), preferably at least two transverse side walls (4) opposite the latter, are formed by wings (10) folded onto one another, preferably by sandwiching folded wings (10') extending the other two side walls (4') of the planter and each comprising at least one cut-out (11) in the form of a slot on their respective upper edge (4") designed to accommodate said or one of the tabs or anchoring lugs (9) when the wall (5"") concerned of the sleeve (5) rests on said edge (4").

5. Container according to any of claims 1 and 4, **characterised in that** at least some of the walls (5", 5"") that form the sleeve (5), preferably at least two transverse walls (5") opposite the latter, are provided with at least one tab or anchoring lug (7) on their lower edges (5"') and **in that** at least two side walls (4, 4') of the planter (2), preferably at least two transverse side walls (4) opposite the latter, each comprise at least one slot (11) in their respective upper edge (4") or close to the latter, in the form of a cut-out or flat gap between the inner or outer face of said wall (4) and a wing (4"') formed on the latter and extending parallel thereto, each of said slots (11) being designed to receive said or one of the tabs or anchoring lugs (7) when the sleeve (5) is mounted on and/or in the planter (2).

6. Container according to claim 4 or 5, **characterised in that** the sleeve (5) has, in the mounted state, at least two opposite side walls (5") that rest on the bottom (3) of the planter (2) and that are in surface contact with the inside surfaces of the corresponding opposite side walls (4') of the planter (2), the other two opposite walls (5") of the sleeve (5) optionally resting on the upper edges (4") of the other opposite side walls (4) of the planter (2), the tabs or anchoring lugs (7 and 11) being engaged in the respective corresponding accommodating cut-outs (8 and 11) of the bottom (3) and side walls (4) in question of the planter (2).

7. Container according to claim 4 or 6, **characterised in that** the side walls of the planter (2) that consist of folded wings (10) of the side portion (2') forming the bottom (3) and having slot-shaped cut-outs (11) in their upper edges (4") correspond to the smaller side walls (4) of the rectangular planter (2).

8. Container according to any of claims 1 to 7, **characterised in that** the bottom (3) and the bases of the side walls (4 and 4') of the planter (2) are provided with cut-outs (12) forming through openings, the cut-outs of bases of the side walls (4') optionally being formed in the extension of slot-shaped cut-outs (8) of the bottom (3) of the planter (2) that accommodates the or some of the anchoring lugs (7) of the sleeve (5).

9. Container according to any of claims 1 to 8, **characterised in that** it also comprises at least one underframe structure (13) that extends under the planter (2), formed in a single piece with said planter (2) or connected to the latter at attachment sites (14) made in the bottom (3) and having perforations (15) that allow the circulation of liquid under said planter (2).

10. Container according to claim 9, **characterised in that** the or each underframe structure (13) consists of a sleeve or frame that is obtained by folding a structure that is closed on itself from a strip (13') of continuous hollow flat material and having on the one hand cut-outs (15) that form perforations in its lower edge that is designed to rest on the support that accommodates the container (1) and on the other hand tabs or assembly lugs (16) that are provided with bonding means (16'), for example of the hook or shoulder type, and interlocking in the attachment sites (14) made in the bottom (3) of the planter (2).

11. Container according to any of claims 1 to 10, **characterised in that** the hollow flat material consists of corrugated cardboard, coated by a layer or covered by an airtight wall-facing, the bracing structure (6') being formed by a corrugated sheet that defines walls connected to two wall-facing sheets (6).

12. Container according to any of claims 1 to 11, **characterised in that** the hollow flat material consists of an extruded section of thermoplastic polymer, with the bracing structure (6') consisting of perpendicular walls that connect the two sheets (6) that form the opposite surfaces of the material.

13. Container according to claim 11 or 12, **characterised in that** the side (5') that forms the sleeve (5) is cut out and folded in such a way that the bracing walls (6') extend in transverse direction relative to the planes of the walls (5", 5"") of said sleeve (5).

14. Container according to claim 11 or 12, **characterised in that** the side (2') that forms the planter (2) is cut-out and folded in such a way that the bracing walls (6') extend in longitudinal direction for the bottom (3) of the planter (2) and in transverse direction relative to the respective planes of the side walls (4, 4') of the planter (2).

15. Container according to any of claims 11 to 14, **characterised in that** the planter (2), the sleeve-shaped body (5), and if necessary the underframe structure(s) (13) are made from hollow flat materials of different kinds.

16. Container according to claim 15, **characterised in that** the flat material that forms the removable upper sleeve-shaped body (5) has a less rigid structure, and optionally a lower weight, than the flat material that forms the planter (2) and optionally the underframe structure (13).

17. Container according to claim 3 and any of claims 5 to 13, **characterised in that** the planter (2) moulded for example by injection moulding or thermoforming, is made of a thermoplastic polymer material or Thermodur, which may or may not be reinforced by fibres or other charges, in particular made from a material that is selected from the group formed by polyester, high-density polyethylene and polypropylene.

18. Container according to claim 3 and any of claims 5 to 13 and 17, **characterised in that** at least two opposite side walls (4, 4') of the planter (2) which is injection-moulded or thermoformed, with a rectangular shape, preferably the four side walls (4, 4'), have receding local deformations (19) that define reinforcements on the outer side surfaces of the planter (2), which can be used as handles for gripping the container (1).

19. Container according to claim 3 and any of claims 5 to 13, 17 and 18, **characterised in that** the wall of the bottom (3) of the planter (2), injection-moulded or thermoformed, is provided with local deformations (20), preferably with a linear extension in the longitudinal and transverse directions of said planter (2), defining prominent hollow ribs relative to the inner surface of said bottom (3), preferably with a semi-circular cross-section, whereby said ribs (20) are advantageously provided with perforations (20') in the form of transverse slots.

20. Container according to any of claims 1 to 19, **characterised in that** the rectangular sleeve (5) is equipped in its corners with receding projections (21), obtained for example by local deformation by folding cut-out portions of the side (5') of hollow flat material that constitutes said sleeve (5), said projections (21) corresponding to support sites for the planter (2) or the underframe (13) of the upper container (1) during the binding or stacking of several containers (1).

21. Container according to any of claims 1 to 20, **characterised in that** the upper edge of the sleeve (5) is equipped with prominent portions (22), for example in the form of tabs, and wherein the planter (2) is provided, on at least two opposite side walls (4, 4'), with reinforcements or recesses (22') with a shape that is essentially complementary to said prominent portions (22), said portions (22) being engaged in the reinforcements or recesses (22') of the planter (2) of the upper container (1) when stacking and binding several containers (1).

22. Container according to any of claims 1 to 21, **characterised in that** the material that constitutes the planter (2) and/or the material that constitutes the sleeve (5) is/are biodegradable.

23. Method for placing plants on flat or sloping roofs, **characterised in that** it consists of providing containers (1) according to any of claims 1 to 22, each comprising a planter (2), a sleeve-shaped body (5) that is mounted on this planter (2), and optionally one or more underframe structure(s) (13), filling said containers (1) to a plant complex height (17) that is greater than the width or height of the side walls (4 and 4') of the planters (2) of the containers (1), seeding said containers (1) and allowing the resulting plants (18) to grow to a specific stage of development, preferably to a height that is lower than the upper edge of the sleeve-shaped body (5) of the containers (1), transporting said planted containers (1) to the site where plants are to be planted by binding them or by arranging them in staged containers, unstacking or extracting the containers (1) on site, and in placing them side by side, with mutual contact, on the surface to be covered, before or after the removal or not of the sleeve-shaped bodies (5).

24. Method according to claim 23, **characterised in that** before they are transported to the site the pre-planted containers (1) are packaged, for example on pallets, firstly forming stacks by binding several containers (1), the planter (2) of an upper container (1) resting on the sleeve-shaped body (5) of the container (1) immediately below it.

25. Method according to any of claims 23 and 24, **characterised in that** it also consists, after installing the containers (1) on site and removing the sleeves (5), of recovering the latter for the purpose of recycling or reuse, after unfolding and flattening.

26. System for placing plants on inaccessible surfaces, in particular flat roofs or at least slightly sloping roofs, said surfaces being water-tight and, if necessary, thermally-insulated, the system being **characterised in that** it is obtained by means of the method according to any of claims 23 to 25 and **in that** it comprises a plurality of planted modules arranged in a mutually adjacent manner on said surface, each module consisting of a planter (2), optionally mounted on at least one underframe structure (13), forming part of a container (1) according to any of claims 1 to 22 and filled with a plant complex (17) in which hardy plants (18) that preferably have limited requirements, preferably living plants, are planted, with the height of the plant complex (17) exceeding that of the side walls (4 and 4') of the planter (2).

27. System for placing plants on inaccessible surfaces, in particular flat roofs or at least slightly sloping roofs, said surfaces being water-tight and, if necessary, thermally insulated, the system being **characterised in that** it is obtained by means of the method according to any of claims 23 and 24, and **in that** it comprises a plurality of planted modules arranged in a mutually adjacent manner on said surface, each module consisting of a container (1) according to any of claims 1 to 22, at least the sleeve (5) being made of a biodegradable material, as well as optionally the side walls (4, 4') of the planter (3), each of said containers (1) being filled with a plant complex (17) in which hardy plants (18) that preferably have limited requirements, preferably living plants, are planted.
